# FASCICULE DE BREVET EUROPEEN

(11) **EP 1 949 546 B1**
(45) Date de publication et mention de la délivrance du brevet: **24.10.2018**
(21) Numéro de dépôt: 06831084.6
(22) Date de dépôt: 07.11.2006
(51) Int. Cl.: H04B 1/10, H04L 27/26

(54) **PROCÉDÉ ET SYSTÈME DE MESURE D'OCCUPATION ET D'ALLOCATION DU SPECTRE DE TRANSMISSION**
VERFAHREN UND SYSTEM ZUR MESSUNG DER BELEGUNG SOWIE ZUR ZUWEISUNG EINES ÜBERTRAGUNGSSPEKTRUMS
METHOD AND SYSTEM FOR MEASURING THE OCCUPATION AND ALLOCATION OF A TRANSMISSION SPECTRUM

(30) Priorité: 07.11.2005 FR 0511304
(43) Date de publication de la demande: 30.07.2008
(73) Titulaire: Orange, 75015 Paris (FR)
(72) Inventeur: BELLEC, Martial, F-92794 Issy Les Moulineaux Cedex 9 (FR)
(74) Mandataire: Cabinet Plasseraud
(86) Numéro de dépôt international: PCT/FR2006/002482
(87) Numéro de publication internationale: WO 2007/051933

(56) Documents cités:
- EP-A- 1 237 339
- EP-A- 1 298 949
- EP-A- 1 575 234
- WO-A-97/40609
- GUOQING LI ET AL: "Downlink dynamic resource allocation for multi-cell OFDMA system" VEHICULAR TECHNOLOGY CONFERENCE, 2003. VTC 2003-FALL. 2003 IEEE 58TH ORLANDO, FL, USA 6-9 OCT. 2003, PISCATAWAY, NJ, USA,IEEE, US, 6 octobre 2003 (2003-10-06), pages 1698-1702, XP010701446 ISBN: 0-7803-7954-3

## Description

La présente invention concerne la mesure d'occupation et l'allocation d'au moins un spectre de transmission pour un système de communications par signaux multiporteuses. Par occupation, on entend la présence d'au moins un signal sur une partie du spectre.

Ce type de système tel que les systèmes de téléphonie mobile, WRAN ou autres, utilise des transmissions dites OFDM ou OFDMA (en anglais « orthogonal frequency division multiplexing » et « orthogonal frequency division multiplexing access »), c'est-à-dire des transmissions en multiplexage par répartition orthogonale de la fréquence, appliquées à un signal ou à plusieurs signaux.

Les signaux véhiculés sur les réseaux de ces systèmes sont constitués de symboles temporels, chacun étant émis sur un ensemble de porteuses à des fréquences différentes.

Ces systèmes sont classiquement des systèmes dynamiques dont les équipements d'émission peuvent se connecter ou se déconnecter. C'est le cas des systèmes OFDM ou encore des systèmes OFDMA de boucle locale radio comme le WRAN dans lesquels des émetteurs peuvent interrompre ou reprendre leurs émissions sans que les autres émetteurs en soient avertis.

Conventionnellement, les équipements d'émission forment des systèmes au sein desquels ils sont regroupés et, au sein de chaque groupe un équipement particulier, dit station de base, détermine l'allocation du spectre de transmission pour ce groupe. Les différents systèmes peuvent s'ignorer ou avoir connaissance des autres mais sans les prendre en compte au niveau de l'allocation. Par contre, les équipements d'émission d'un même système sont adaptés pour ne pas interférer les uns avec les autres.

La mesure de l'occupation du spectre de transmission est importante pour permettre une optimisation de l'allocation entre les équipements d'émission.

En particulier, dans les systèmes actuels, des paramètres de priorité sont attribués, de sorte que certains sous-ensembles de porteuses sont normalement réservés à des équipements ou dynamiquement attribués afin de respecter des exigences de qualité de service QoS (« Quality of Service » en langue anglaise). Notamment, des priorités différentes peuvent être attribuées à des systèmes voisins.

Dans ces systèmes, des mesures de l'occupation de spectre sont nécessaires de façon à ce que le spectre soit alloué en tenant compte des équipements prioritaires. En particulier, ces mesures doivent être réalisées sur un espace hertzien commun aux systèmes, c'est-à-dire sur une bande de fréquence sur lesquels les équipements de réception sont susceptibles de recevoir des signaux émis par des équipements d'émission de différents systèmes. Si les paramètres de priorité ne sont pas respectés, la qualité des services correspondants ne peut plus être assurée.

Par extension, dans le cas des systèmes de téléphonie mobile, comme ceux de troisième génération dits 3GPP LTE (« Long Term Evolution » en langue anglaise), les stations de base sont les relais du système auxquels se connectent les équipements de téléphonie qui sont à la fois émetteurs et récepteurs.

Dans ces systèmes il n'existe pas de paramètres de priorité. Toutefois, pour maintenir la qualité de service, il est nécessaire de mettre à jour les paramètres de qualité de la liaison radio ainsi que de son environnement lorsque le terminal mobile se déplace. C'est le cas notamment d'un téléphone mobile passant d'un relais à un autre alors qu'une communication est déjà établie et doit être maintenue (situation dite de « handover »). Sur la base des mesures, typiquement de niveaux radio des autres cellules effectuées et remontées à la station de base par le terminal mobile, le handover entre cellules et l'allocation de spectre associée peuvent être réalisés.

Dans tous les cas, la variabilité des débits utilisés lors des connexions, en particulier multimédia et Internet, et la proximité des porteuses exigent une meilleure allocation qu'une réservation statique. En particulier, une allocation statique n'est pas appropriée pour des espaces hertzien commun avec des trafics hétérogènes partageant les mêmes bandes de fréquences et qui comportent des équipements prioritaires sur certains sous-ensembles de porteuses et d'autres équipements auxquels aucun paramètre de priorité n'est attaché comme dans un système WRAN.

Il est alors souhaitable de réaliser une allocation dynamique du spectre de l'espace hertzien commun, les sous-ensembles réservés étant redistribués lorsqu'ils ne sont pas utilisés.

Un problème surgit lorsque, une fois la communication établie par un équipement non prioritaire sur un sous-ensemble de porteuses réservé, un équipement disposant d'un niveau de priorité supérieur soudainement utilise la même portion de spectre, obligeant ainsi le terminal non prioritaire à libérer la portion de spectre convoitée par le terminal prioritaire. Dans ce cas, l'équipement non prioritaire doit être en mesure de détecter cet événement et, ensuite, de libérer le spectre utilisé, cessant ainsi d'interférer l'équipement prioritaire.

Il est à noter que chaque équipement d'émission dispose de son propre spectre de transmission couramment appelé canal principal. Des problèmes d'interférence entre deux équipements d'émission peuvent survenir sur le spectre de transmission d'un équipement mais également sur d'autres parties du spectre de l'espace hertzien commun. En effet, Il est possible de considérer que, les réjections des émetteurs n'étant pas idéaux sur les canaux adjacents, dits aussi canaux secondaires, l'émission dans le canal principal se traduit par la génération non voulue d'interférences sur les canaux secondaires. En ce sens, la portion de spectre à prendre en compte peut comprendre, non seulement, le canal principal mais également les canaux secondaires.

Une telle allocation dynamique requiert une gestion fine de l'occupation du spectre de transmission. Bien qu'il existe déjà des techniques mises en oeuvre dans ce domaine, aucune n'est satisfaisante.

Par exemple, le document de brevet WO 2005/069522 effectue des détections et mesures notamment du rapport signal à bruit et donc, de l'occupation sur l'ensemble du spectre, de sorte qu'il n'est pas possible de distinguer les sous-ensembles de porteuses et notamment, les sous-ensembles réservés.

Le document de brevet EP 1 575 234 A2 divulgue un système de communication multiporteuses dans lequel des stations de base effectuent l'allocation des segments élémentaires temps/fréquence aux différentes stations mobiles servies.

Un tel système d'accès multiple en division de fréquence orthogonale (OFDMA) est également connu de Guoqing et al: "Downlink dynamic resource allocation for multi-cell OFDMA system" Vehicular Technology Conférence, IEEE, 6.10.2003, pages 1698-1702, XP010701446 ISBN: 0-7803-7954-3.

Les documents EP 1 237 339 A1 et WO 97/40609 A1 enseignent de mesurer, sur deux sous-porteuses d'un système multiporteuses de type xDSL, des interférences émanant de transmissions radio amateur dans une bande réservée. L'émetteur n'émet aucun signal sur ces deux sous-porteuses.

Le document EP 1 298 949 A1 montre un système de communication OFDM radio (HiperLAN/2) qui est capable de détecter une interférence émanant des systèmes radar externes utilisant une partie du spectre. La détection est effectuée pendant des espaces vides de la trame HiperLAN dans lesquelles aucun signal HiperLAN n'est émis.

Le but de la présente invention est de résoudre ce problème en définissant un procédé de mesure de l'occupation d'au moins un spectre de transmission pour un système de communications par signaux radiofréquences multiporteuses selon la revendication 1 permettant une mesure fine, en vue notamment, d'une allocation optimisée du spectre tout en maintenant une qualité de service. L'invention concerne également un procédé d'allocation du spectre selon la revendication 10, un programme d'ordinateur selon la revendication 11 et des équipements selon les revendications 12 et 13.

Des modes de réalisation préférés sont définis par les revendications dépendantes.

A cet effet, on décrit un procédé de mesure de l'occupation d'au moins un spectre de transmission pour un système de communications par signaux radiofréquences multiporteuses, caractérisé en ce que le procédé comporte :
- une étape de découpage du spectre en sous-ensembles de porteuses et de découpage en temps au sein des sous-ensembles pour former des segments temps/fréquence élémentaires ;
- une étape de non-émission de signal, par au moins un équipement d'émission du système, pendant des segments élémentaires de non-émission décalés entre eux dans le temps et en fréquence; et
- une étape de mesure de paramètres choisis de signaux véhiculés dans le spectre de transmission pendant chacun de ces segments élémentaires de non-émission.

Grâce à ce procédé et, en particulier, à la détermination de segments élémentaires de non-émission de signal et à la mesure de paramètres des signaux transmis sur ces segments, il est possible de détecter l'émergence de transmissions dues à d'autres équipements sur un sous-ensemble de porteuses particulier et notamment, l'émergence de transmissions sur un sous-ensemble réservé.

Selon d'autres aspects
- le système comprend une pluralité d'équipements d'émission réalisant chacun une étape de découpage du spectre de transmission, une étape de non-émission pendant des segments élémentaires de non-émission et une étape de mesure de paramètres ;
- ledit système comprend une pluralité de groupes d'équipements d'émission, les étapes de découpage, de non-émission et de mesure étant réalisées de manière coordonnée pour tout le groupe ;
- ledit système comprend une pluralité de groupes d'équipements d'émission et en ce que, une seule étape de découpage est réalisée pour au moins un groupe, de sorte qu'aucun des équipements de ce groupe n'émet pendant les segments élémentaires de non-émission ;

- des caractéristiques de fréquence et/ou de durée des segments élémentaires sont déterminées en fonction de caractéristiques de l'environnement de fonctionnement ;
- lesdits segments élémentaires de non-émission sont répartis dans le temps sur une période déterminée et en fréquence sur l'ensemble du spectre de transmission pour former un motif de non-émission ;
- lesdits segments élémentaires de non-émission sont répartis pour former le motif de non-émission en fonction de caractéristiques de l'environnement de fonctionnement ;
- l'étape de découpage ainsi que les étapes de non-émission et de mesure sont répétées plusieurs fois pour un même spectre de transmission, afin de former plusieurs motifs de non-émission, l'étape de découpage comprenant la combinaison des différents motifs entre eux ;
- au moins deux étapes de mesure sur des segments élémentaires de non-émission distincts sont réalisées simultanément ;
- lesdites étapes de non-émission et de mesure sur un segment élémentaire sont répétées sans allouer aucun segment de non-émission dans des segments réservés à des équipements particuliers.

Selon encore d'autres caractéristiques du procédé de l'invention :
- les segments élémentaires de non-émission sont répartis de manière régulière dans le temps et sur le spectre de transmission ;
- différents motifs de segments élémentaires de non-émission sont juxtaposés les uns aux autres lors de ladite étape de combinaison ;
- différents motifs de segments élémentaires de non-émission sont superposés entre eux lors de ladite étape de combinaison ;
- pour au moins un motif de non-émission, les segments élémentaires de non-émission sont simultanés ;
- les paramètres mesurés comprennent au moins un paramètre parmi le groupe formé : d'un niveau de priorité d'affectation d'un sous-ensemble déterminé, d'un niveau d'énergie sur une partie du spectre de transmission, de caractéristiques temporelles, de caractéristiques de codage, ou de caractéristiques d'émetteur et/ou de destinataire ;
- ladite étape de mesure de paramètres comprend un échantillonnage des signaux véhiculés pendant les segments élémentaires de non-émission et la détermination de paramètres en fonction de ces échantillons en temps réel au cours de chacun des segments élémentaires de non-émission ;
- ladite étape de mesure de paramètres comprend un échantillonnage des signaux véhiculés pendant les segments élémentaires de non-émission et la détermination de paramètres en fonction de ces échantillons à l'issue de l'échantillonnage et avant une nouvelle étape de mesure sur un segment élémentaire de non-émission du même sous-ensemble de porteuses ;
- lesdites étapes de non-émission et de mesure sur un segment élémentaire de non-émission sont répétées périodiquement ;
- au moins une étape de non-émission comprend l'émission d'au moins un signal sensiblement nul sur tout ou partie des porteuses du segment élémentaire de non-émission correspondant ; et
- au moins une étape de non-émission comprend le rejet du signal radiofréquence sur toutes les porteuses du segment élémentaire de non-émission correspondant.

L'invention sera mieux comprise à la lumière de la description faite à titre d'exemple et en référence aux figures sur lesquelles :
- la figure 1 représente schématiquement un système mettant en oeuvre le procédé de l'invention ;
- les figures 2 et 3 représentent l'allocation du spectre de transmission dans le système de la figure 1 ;
- la figure 4 représente le détail d'un des équipements du système de la figure 1 ; et
- les figures 5 et 6 représentent l'allocation du spectre de transmission dans un autre mode de réalisation de l'invention.

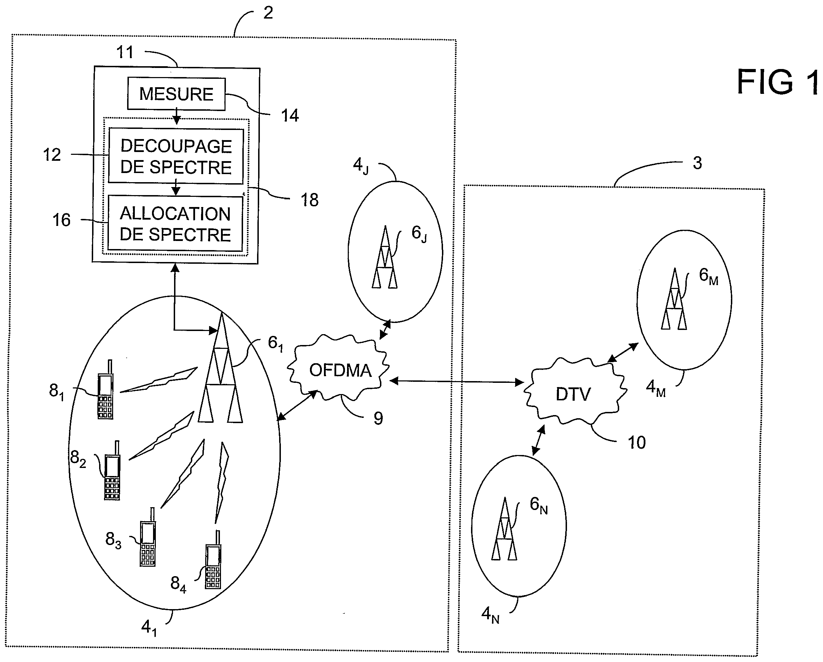

La figure 1 représente un environnement de fonctionnement mettant en oeuvre le procédé de l'invention et comportant des systèmes de communications par signaux multiporteuses multiplexés en fréquence et en temps.

Dans un premier mode de réalisation, l'invention est décrite dans une communication de type diffusion ou « broadcast », c'est-à-dire avec un équipement d'émission fixe, ou station de base, adressant des signaux à des équipements de réception.

Cet environnement comprend deux systèmes 2 et 3 chacun comportant des groupes d'équipements marqués 4₁ à 4_{M}. Chaque groupe comprend au moins un équipement d'émission 6₁ à 6_{M} tel qu'une station de base équipée d'une ou plusieurs antennes. A chaque station de base sont associés plusieurs équipements de réception tels que les équipements 8₁ à 8₄ associés à la station de base 6₁. Chaque équipement de réception d'un groupe est adressé par la station de base correspondante dans des segments distincts en temps et en fréquence du spectre de transmission et l'allocation du spectre de transmission de chaque équipement prend en compte les autres équipements d'émission du groupe.

Chaque système comporte un réseau de transport permettant les échanges de données entre les groupes et entre les terminaux. Dans l'exemple, le système 2 comporte un réseau 9 de type OFDMA et le système 3 comporte un réseau 10 de type DTV (Digital TV). Ces systèmes présentent un espace hertzien commun, c'est-à-dire une bande de fréquence dans laquelle des signaux provenant de systèmes différents sont susceptibles d'être véhiculés.

Dans l'exemple décrit, pour des raisons de simplicité, le spectre de transmission est décrit comme étant identique pour tous les équipements d'un groupe. Toutefois, il est possible de disposer de plusieurs spectres de transmission, c'est-à-dire de plusieurs bandes ou canaux de communications.

Comme indiqué précédemment, le système 2 cohabite également avec le système 3 comprenant un groupe d'équipements marqué 4_{N}, avec un équipement d'émission 6_{N} tel qu'une station de base également équipée d'au moins une antenne. A cette station de base 6_{N} sont associés plusieurs équipements de réception non représentés.

De par la configuration de l'environnement de fonctionnement, les équipements 8₁ à 8₄ sont également susceptibles de recevoir les signaux émis par la station de base 6_{N} dans la même portion de spectre de transmission que celle utilisée par les équipements du système 2.

Typiquement, le système 2 peut être un système radiodiffusion WRAN IEEE802.22 et le groupe d'équipements 4_{N} appartient au système 3 de diffusion de télévision numérique DTV ("Digital TV" en langue anglaise). En conséquence de normes établies, dans une telle situation, le groupe d'équipements 4_{N} du système 3 utilise prioritairement le spectre UHF par rapport aux groupes du système 2.

Il est à noter que les systèmes 2 et 3 n'harmonisent pas leur utilisation spectrale et que, en ce sens, aucune communication spécifique n'est prévue entre eux.

Par nature, un tel environnement avec ces systèmes est dynamique et hétérogène. En effet, l'environnement est dynamique au sens où des équipements d'émission peuvent entrer en communication ou interrompre leur communication tout en partageant le même spectre de transmission ou des spectres voisins.

Par ailleurs, l'ensemble des équipements est dit hétérogène car il comporte des équipements d'émission avec des niveaux de priorité différents sur des ensembles de porteuses ou sous-ensembles de porteuses particuliers. Ainsi, certains sous-ensembles de fréquence du spectre de transmission sont normalement réservés pour certains équipements tandis que d'autres équipements ne disposent pas de paramètres de priorité.

La constitution et de l'environnement de fonctionnement avec les systèmes 2 et 3 est conventionnel et ne sera pas décrit plus en détail.

Dans le mode de réalisation décrit, la station de base 6₁ comporte un dispositif 11 d'allocation du spectre de transmission. Ce dispositif comprend une unité 12 de découpage du spectre, une unité 14 de mesure de paramètres des signaux véhiculés dans le spectre de transmission et une unité 16 d'allocation du spectre de transmission. Ces différentes unités sont, par exemple, des composants dédiés ou encore des programmes ou des éléments de programmes d'ordinateur. Dans le mode de réalisation décrit, l'unité de mesure 14 est un équipement dédié relié par un bus de données adéquat à un microprocesseur ou un microcontrôleur 18 qui comporte une mémoire morte ou une mémoire vive dans laquelle sont stockés des programmes formant les unités 12 et 16.

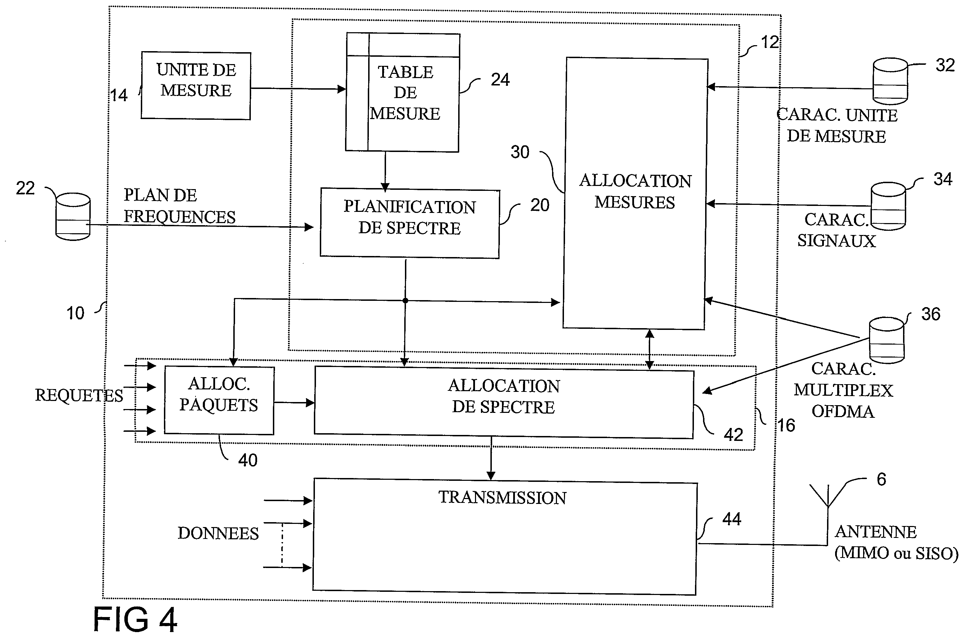

Le détail du dispositif 11 d'allocation du spectre est décrit ultérieurement en référence à la figure 4.

En référence aux figures 1, 2 et 3, on va maintenant expliquer le principe général de fonctionnement de l'invention.

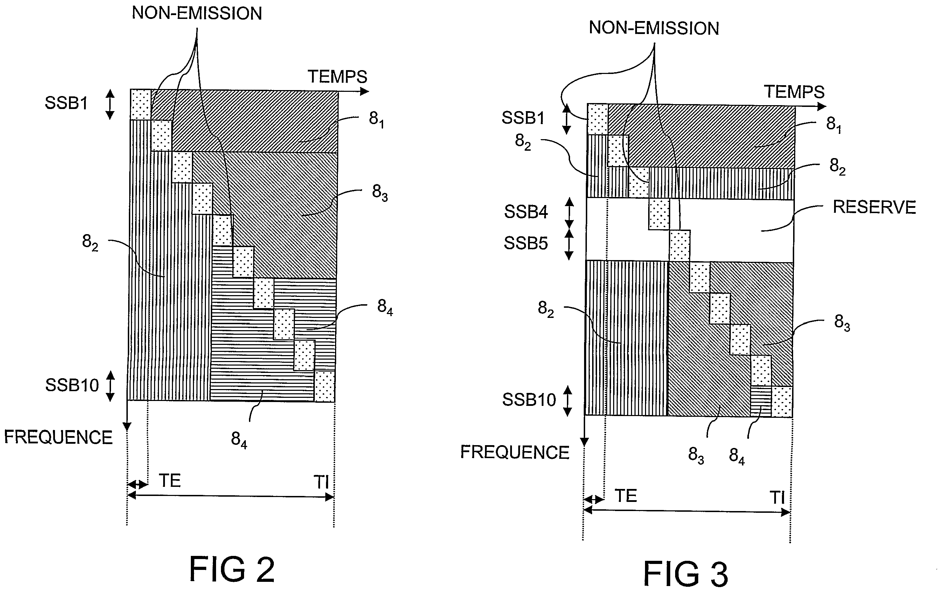

L'unité 12 de découpage de spectre permet de réaliser un découpage du spectre de transmission en sous-ensembles de porteuses notés SSB1 à SSB10 sur les figures 2 et 3. Cette unité 12 permet également de découper chaque sous-ensemble de porteuses dans le temps afin de former des segments temps/fréquence élémentaires d'une durée déterminée notée TE.

Une allocation du spectre de transmission est ensuite réalisée entre les différents équipements du groupe 8₁ à 8₄ tout en conservant dans chaque sous-ensemble de porteuses un segment élémentaire non attribué, c'est-à-dire attribué à aucun des équipements du groupe. En conséquence, la station de base 6₁ n'émettra de signal vers aucun des équipements du groupe pendant ces segments élémentaires dits de non-émission. La non-émission de signal est justifiée par le fait que, de par la construction de l'émetteur-récepteur de la station de base, l'isolation est insuffisante entre émetteur et récepteur, menant à une interférence donc un biais, voire pire, à une saturation ou aveuglement, du récepteur.

La figure 2 est une représentation d'un plan d'allocation du spectre de transmission obtenu. Sur cette figure, le temps est en abscisse et la fréquence en ordonnée. Dans cet exemple, les sous-ensembles de porteuses SSB1 à SSB10 sont formés de manière régulière sur la totalité du spectre de transmission, c'est-à-dire qu'ils comportent tous le même nombre de porteuses. De même, les segments élémentaires de non-émission des différents sous-ensembles sont répartis de manière régulière en temps et en fréquence, c'est-à-dire que les écarts en temps et en fréquence entre deux segments élémentaires consécutifs sont constants. L'ensemble des segments élémentaires de non-émission est appelé motif de non-émission ou « pattern » en langue anglaise et est constitué, dans l'exemple, de portions temps fréquences contiguës dont la dimension dans le temps est un multiple entier de TE et dont la dimension en fréquence est un multiple entier de SSB.

Un motif complet s'étend en fréquence sur tout le spectre de transmission du canal principal et en temps sur une durée déterminée dite durée d'échantillonnage TI.

Dans le cas où les spectres de transmission ne sont pas identiques, le motif peut être étendu également sur k canaux secondaires, la durée d'échantillonnage TI deviendrait alors k fois TI.

Comme cela est visible sur la figure 2, 17 segments élémentaires sont alloués à l'équipement 8₁, 30 à l'équipement 8₂, 22 à l'équipement 8₃ et 21 à l'équipement 8₄. La représentation faite à la figure 2 est volontairement simplifiée en présentant une allocation continue et non pas l'allocation réelle, c'est-à-dire selon la technologie OFDMA, avec une distribution équirépartie sur le spectre de transmission de sorte que les porteuses destinées aux différents équipements sont entrelacées.

Ultérieurement, des informations sont transmises vers chacun des équipements de réception par la station de base 6₁ en respectant ces créneaux du spectre de transmission.

Pendant les segments élémentaires de non-émission, l'unité de mesure 14 est mise en oeuvre afin de détecter l'émergence de signaux véhiculés dans le spectre de transmission, c'est-à-dire de signaux émis par d'autres équipements de transmission dans l'espace hertzien commun. L'unité 14 est adaptée pour mesurer des paramètres choisis de ces signaux.

Par ailleurs, pendant le segment de non-émission, la mesure peut être aussi bien effectuée dans le canal dit principal que dans les canaux secondaires au moyen, par exemple, de transpositions de fréquences hétérodynes. Comme indiqué précédemment, dans la suite de la description, nous nous limitons dans le cadre de cette réalisation à la mesure sur le canal principal.

Dans l'exemple, l'unité de mesure 14 comprend un corrélateur mis en oeuvre afin de déterminer l'énergie accumulée par les signaux véhiculés sur chacun des sous-ensembles de porteuses pendant les segments élémentaires de non-émission. Lorsque l'énergie dépasse un seuil critique, cette émission doit être prise en compte au niveau du groupe. En conséquence, l'unité 14 détecte les portions de spectre sur lesquels sont véhiculées des signaux au dessus d'un seuil critique.

Dans un mode de réalisation, la mesure comprend un échantillonnage du signal et une détermination des paramètres faite en temps réel pendant le segment de non-émission. Alternativement, cette mesure comprend un échantillonnage réalisé au cours des segments élémentaires et la détermination ultérieure des paramètres mesurés. Cette détermination ultérieure est achevée avant l'arrivée d'un nouveau segment de non-émission sur le même sous-ensemble de porteuses soit, dans le cas où les mesures sont réalisées périodiquement, pendant la durée TI - TE.

L'utilisation de ces segments élémentaires de non-émission dans chacun des sous-ensembles de porteuses permet ainsi de détecter l'émergence de signaux émis par des équipements non référencés dans le groupe et d'évaluer le niveau de priorité correspondant.

Par exemple, des signaux provenant de l'équipement prioritaire 6_{N} du groupe 4_{N} appartenant au système 3 sur les sous-ensembles de porteuses SSB4 et SSB5 sont détectés.

En conséquence, une nouvelle allocation en temps et en fréquence du spectre de transmission entre les différents équipements du groupe est réalisée en fonction des mesures faites précédemment.

En particulier, cette allocation prend en compte le niveau de priorité d'affectation des sous-ensembles SSB4 et SSB5 pour aboutir au plan d'allocation représenté en référence à la figure 3.

Dans cet exemple, la partie du spectre de transmission allouée à l'équipement 8₄ est réduite afin de conserver une même quantité du spectre de transmission allouée aux autres équipements. Ceci permet de maintenir la qualité de service pour les équipements 8₁ à 8₃ tout en respectant les équipements prioritaires.

Ainsi, dans le nouveau plan d'allocation un unique segment est alloué à l'équipement 8₄. Par ailleurs, dans ce nouveau plan d'allocation, 20 segments élémentaires sont réservés dans les sous-ensembles de fréquence SSB4 et SSB5.

Dans ce mode de réalisation, le même motif de non-émission est maintenu dans les deux plans d'allocation, c'est-à-dire avec le même nombre des mêmes segments élémentaires de non-émission répartis de manière identique en temps et en fréquence.

En particulier, des segments de non-émission, au cours desquels des mesures seront réalisées, sont maintenus dans les sous-ensembles de porteuses réservés. Cela permet de détecter la fin de l'occupation de ces sous-ensembles pour avantageusement réallouer dynamiquement le spectre de transmission dès que possible.

Ainsi, grâce au découpage du spectre de transmission en segments élémentaires temps/fréquence et à la réservation de segments élémentaires dans les sous-ensembles de porteuses au cours desquels aucun des équipements du groupe n'est autorisé à émettre, il est possible de réaliser une mesure fine de l'occupation du spectre de transmission.

Cette mesure permet ensuite d'allouer dynamiquement le spectre de transmission tout en respectant la qualité de service, notamment au niveau du respect des priorités sur certains sous-ensembles de porteuses.

Avantageusement, au cours de l'étape de découpage du spectre de transmission, des caractéristiques de l'environnement de fonctionnement sont utilisées pour déterminer les caractéristiques de fréquence et/ou de durée des segments élémentaires. En particulier, les segments élémentaires sont déterminés en fonction des types de signaux susceptibles d'être véhiculés dans le spectre de transmission ou encore des capacités de l'unité de mesure ou des caractéristiques du réseau 9 de transmission OFDM.

Par exemple, la durée TE d'un segment élémentaire est choisie égale à un nombre entier de fois la durée d'un symbole OFDM, c'est-à-dire la durée requise pour l'émission d'un signal sur chacune des porteuses du spectre de transmission.

De manière similaire, les sous-ensembles de porteuses SSB comportent un nombre entier de porteuses, c'est-à-dire qu'un sous-ensemble couvre une bande de fréquence égale à un nombre entier de fois l'écart entre deux porteuses.

Alternativement, la résolution fréquentielle des moyens de mesure fixe le nombre de porteuses formant un sous-ensemble et la vitesse et la mémoire nécessaire au calcul fixe la durée d'un segment de non-émission.

Dans une autre variante, le nombre de porteuses formant un sous-ensemble SSB est choisi pour correspondre au nombre de porteuses prévues pour un signal particulier susceptible d'être véhiculé dans le spectre de fonctionnement, c'est-à-dire pour correspondre à la largeur de bande d'un signal particulier.

Les mêmes caractéristiques de l'environnement de fonctionnement peuvent également être prises en compte pour déterminer les motifs de non-émission et particulièrement, la répartition temporelle des segments de non-émission. Dans une mode de réalisation particulier, la durée d'échantillonnage TI est déterminée en fonction de signaux susceptibles d'être véhiculés dans le spectre de transmission. Si les signaux évoluent vite, il convient de faire des mesures à des intervalles de temps courts et donc, la durée TI séparant deux segments de non-émission sur un même sous-ensemble de porteuses est réduite. Inversement, si les signaux sont à évolution lente, la durée TI est augmentée.

Ainsi, la durée d'échantillonnage TI est déterminée non seulement par l'application du théorème de Shannon à la largeur de la bande de cohérence, c'est-à-dire la fréquence d'évolution déterminée selon un modèle connu, d'un type de signal susceptible d'être véhiculé mais aussi par la largeur du spectre de transmission pour ce type de signal.

Avantageusement, la durée d'échantillonnage est dimensionnée de telle façon que toute la bande du signal soit mesurée par portions de spectres SSB plus rapidement que la variation de ce signal. Par exemple si :
SSB = 600 kHz,
TE = 5 ms,
Largeur de bande = 6MHz,
Bande de cohérence = 10 Hz,

Alors :
On a bien : 6/(0,6*5) ≤ 1/(10/(2*1000))
Et TI < 50 ms
Dans le cas où les 15 canaux secondaires situés de part et d'autre du canal principal sont également mesurés, k = 2*15+1 = 31 et TI devient TI' < 31 * 50 ms = 1550 ms.

Les caractéristiques des segments et des motifs peuvent également résulter d'une combinaison de ces modes de réalisation, le nombre de porteuses formant un sous-ensemble étant déterminé, par exemple, par la division de la largeur de bande d'un type de signal susceptible d'être véhiculé dans le spectre de transmission par la résolution de l'unité de mesure.

En référence à la figure 4, on va maintenant décrire le détail du dispositif d'allocation 11 selon l'invention.

L'unité de découpage de spectre 12 comprend un élément de planification de spectre 20 qui reçoit en entrée les plans de fréquences pour les équipements du système 2 supposés connus, et les plans de fréquences pour les équipements avec priorité du système 3, lorsqu'ils sont connus, depuis une base de données 22. Cet élément 20 reçoit également une table 24 récapitulant les mesures précédentes et en particulier, la détection éventuelle de signaux prioritaires. Cette table 24 est fournie par l'unité de mesure 14.

L'élément de planification 20 permet ainsi de maintenir en temps réel les portions du spectre qui sont disponibles à l'établissement d'émissions non prioritaires.

L'unité de découpage 12 comprend également un élément 30 de détermination des segments élémentaires de non-émission, c'est-à-dire des segments au cours desquels les mesures seront réalisées.

Cet élément 30 reçoit en entrée les caractéristiques de l'unité de mesure fournies par une base de données 32 pour chaque type de signaux véhiculés par le système 3. Ces caractéristiques comprennent notamment, selon le degré de connaissance a priori du système 3, la résolution de mesure en fréquence SSB, le temps de mesure TE, la taille ou surface en temps et fréquence, nécessaire pour la réalisation d'un échantillon de mesure, l'intervalle de temps maximal entre 2 échantillons consécutifs, le nombre d'unités de mesure disponibles simultanément dans le système ainsi que des informations sur la capacité de ces unités à fonctionner en parallèle.

Par ailleurs, l'élément 30 reçoit également les caractéristiques des signaux susceptibles d'être véhiculés, fournies par une base de données 34. Ces caractéristiques incluent par exemple, la fréquence centrale et le nombre de porteuses réservées, la bande de cohérence du signal, la durée d'une trame qui détermine la durée du segment ainsi que le nombre d'échantillons nécessaires pour détecter un changement de niveau ou moyenner des variations temporelles.

Notamment, afin d'éviter les changements brusques, il est préférable de moyenner temporellement les échantillons par exemple avec un filtre passe-bas numérique à réponse impulsionnelle finie de type FIR ("Finite Impulse Response" en langue anglaise). Typiquement, la largeur de bande maximale de ce filtre est égale à la bande de cohérence du signal à détecter. En outre, des mécanismes d'hystérésis temporels peuvent être implémentés sur les mesures afin d'éviter les allers-retours incessants, ou pompage, dans la table de détection 24 des signaux particulièrement impulsifs dont la bande de cohérence est variable dans le temps.

Enfin, l'élément 30 reçoit les caractéristiques du multiplex OFDMA d'une base de données 36, c'est-à-dire par exemple, les intervalles de temps et de fréquence de multiplexage, la surface du plus petit segment allouable, la durée de la trame et le pourcentage maximal de segments alloués.

L'élément 30 reçoit également des informations de la planification de spectre 20 afin de connaître la portion de spectre utilisable par le système non prioritaire.

A l'aide de ces informations, l'élément 30 détermine les caractéristiques de fréquence et de durée des segments élémentaires de non-émission ainsi que leur répartition en fréquence et en temps. Ainsi, l'élément 30 détermine le motif de non-émission.

Par ailleurs, l'unité 16 d'allocation comprend tout d'abord un élément 40 d'allocation de paquets qui reçoit en entrée les requêtes d'émission de service, c'est-à-dire les requêtes d'émission vers les équipements de réception 8₁ à 8₄ du groupe.

L'élément 40 attribue le spectre de transmission selon les requêtes et selon les règles de qualité de service ainsi que les files d'attente du trafic.

Dans un mode de réalisation particulier, ces règles sont celles définies dans la norme IEEE 802.11b/g et visent à maintenir, par ordre de priorité :
- un débit constant pour un service ;
- une variation en temps réel du débit d'un service ;
- une variation en temps différé du débit du service ;
- un effort maximal de service.

Les informations délivrées par l'élément de planification de spectre 20, par l'élément 30 de détermination des segments élémentaires de non-émission et par l'élément 40, sont fournies à un élément 42 d'allocation de spectre.

Cet élément 42 combine l'allocation faite par l'élément 40 avec celle faite par l'élément 30 dans les portions du spectre qui sont disponibles à l'établissement d'émissions non prioritaires telles que délivrées par l'élément 20 en respectant la structure du multiplex OFDMA délivrée par l'élément 36.

Par exemple, cette allocation est faite en deux temps en intégrant successivement chacune des allocations fournies par les éléments 30 et 40. Dans un mode de réalisation, l'élément 42 privilégie l'allocation faite pour les segments de non-émission afin de garantir en première priorité la détection des signaux prioritaires. En variante, l'élément 42 privilégie la qualité de service pour certains équipements afin de ne pas réduire le nombre de segments de transmission prévus pour des équipements particuliers. Par exemple, dans les sous-ensembles de porteuses réservés, aucun segment de non-émission n'est alloué. Ainsi, dans ce mode de réalisation, l'allocation est réalisée de sorte que le nombre de segments élémentaires alloués à des équipements particulier n'est pas diminué pour l'allocation de segments de non-émission.

Dans un tel mode de réalisation, la qualité de mesure est dégradée, notamment, les mesures dans certains sous-ensembles de porteuses ne sont pas réalisées aussi souvent que prévu par la durée d'échantillonnage TI.

Le plan d'allocation déterminé par l'élément 42 est ensuite transmis à une unité 44 de transmission OFDM qui reçoit en entrée les données de service destinées aux équipements de réception du groupe et forme le signal à transmettre sur l'espace hertzien commun, soit sur une seule antenne en mode SISO ("Single Input Single Output" en langue anglaise), soit sur plusieurs antennes en mode MIMO ("Multiple Input Multiple Output" en langue anglaise)

Ainsi, il est véhiculé sur le spectre de transmission de l'espace hertzien commun un signal radiofréquence multiporteuses qui comporte des segments élémentaires correspondant à des périodes de temps déterminées sur des sous-ensembles de porteuses, au cours desquelles aucun signal n'est émis, ces segments élémentaires de non-émission étant décalés dans le temps et décalés en fréquence.

Dans un autre mode de réalisation, les étapes décrites précédemment de découpage, de non-émission et de mesure sont répétées plusieurs fois pour un même spectre de transmission, afin de former différents motifs de non-émission comportant chacun de segments élémentaires de caractéristiques différentes.

Un tel mode de réalisation est particulièrement adapté dans le cas où différents types de signaux, tels que des signaux de voix portés par des systèmes de microphone sans fil ("wireless microphone" en langue anglaise), des signaux vidéo ou encore des signaux audio-vidéos, sont susceptibles d'être véhiculés simultanément dans le spectre de transmission.

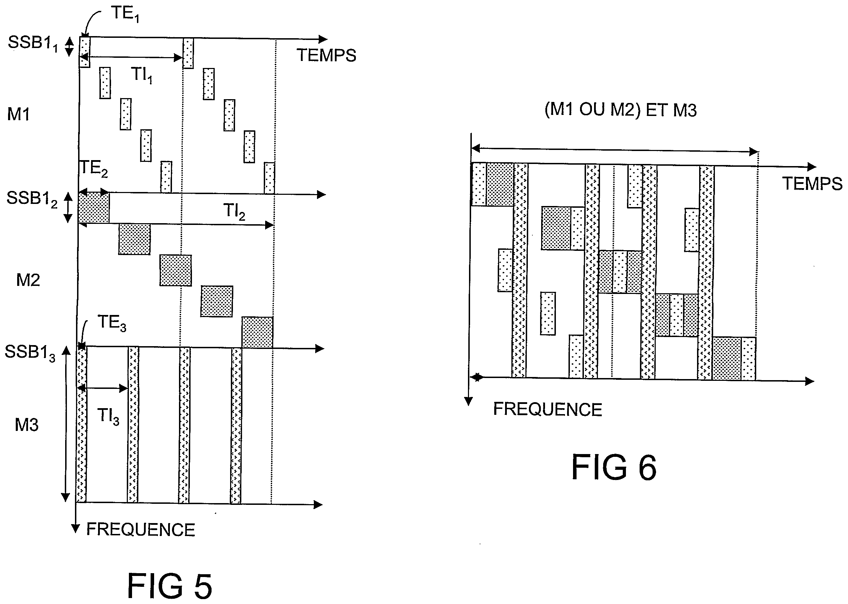

Dans ce cas, la répétition de chaque étape de découpage aboutit à l'obtention de plusieurs motifs de non-émission M1 à M3 comme représenté en référence à la figure 5.

Sur cette figure 5, il est prévu trois motifs comportant chacun des segments de non-émission de caractéristiques différentes. Chacun de ses motifs est obtenu par le découpage d'un même spectre de transmission et dispose de ses propres caractéristiques, notamment en terme de dimension des sous-ensembles de porteuses, de durée TE des segments de non-émission et de durée TI d'échantillonnage.

Il est à noter que le motif M3 prévoit que les segments de non-émission soient simultanés sur tous les sous-ensembles de porteuses, formant un segment de non-émission sur l'ensemble du spectre de transmission. Dans ce cas, la mesure est réalisée sur l'ensemble du spectre de transmission mais les paramètres sont évalués par sous-ensembles.

A cet effet, le système dispose de plusieurs unités de mesure afin de réaliser simultanément la mesure dans tous les sous-ensembles de porteuses.

Ces motifs, c'est-à-dire l'ensemble des segments de non-émission dont ils sont constitués, sont ensuite combinés. Dans un premier cas, les segments de non-émission sont juxtaposés. Cela aboutit toutefois à une allocation d'une fraction importante du spectre de transmission aux segments de non-émission. Dans l'exemple représenté en référence à la figure 5, 90 segments élémentaires de non-émission sont nécessaires avec des motifs juxtaposés.

Afin de diminuer le nombre de segments nécessaires, il est possible de multiplier les unités de mesures. Par exemple, deux unités de mesures distinctes réalisent simultanément une mesure dans les deux premiers motifs. En conséquence, il est possible de superposer les segments élémentaires de non-émission déterminés par ces deux motifs. Le résultat obtenu sera ensuite juxtaposé avec le troisième motif.

Il convient de vérifier si les unités de mesure sont aptes à fonctionner simultanément. Par exemple, si un motif est destiné à détecter la présence d'un signal de forte intensité, il ne doit pas être superposé avec un motif destiné à détecter la présence d'un signal de faible intensité.

On obtient ainsi l'allocation représentée en référence à la figure 6, dans laquelle seuls 80 segments élémentaires de non-émission sont nécessaires.

Bien entendu, si des sous-ensembles de porteuses sont réservés, l'allocation sera faite en conséquence.

Encore d'autres modes de réalisation peuvent également être envisagés.

Dans une variante, plusieurs équipements d'émission réalisent chacun séparément une étape de découpage du spectre afin de déterminer des segments de non-émission au cours desquels chacun de ces équipements réalise des mesures. Ainsi, chacun de ces équipements s'impose des segments de non-émission pour faire des mesures mais sans forcément prendre en compte les autres équipements d'émission dont il a éventuellement connaissance. En effet, même si, typiquement, afin de réaliser l'allocation de spectre entre les équipements d'émission, l'information de non-émission est portée à la connaissance de la station de base qui pourrait en faire bénéficier les autres équipements d'émission de ce groupe, les motifs de non-émission ne sont pas harmonisés entre les équipements d'émission. En conséquence, un équipement donné mesure dans les segments de non-émission, non seulement les autres systèmes, comme le système 3, mais également, s'il y en a, les émissions des équipements de son propre groupe ou de son propre système, ce qui conduit à un biais sur la mesure réalisée.

Avantageusement, le découpage, la non-émission et les mesures sont faits de manière coordonnée au sein de groupes d'équipements d'émission. Cette fois, la station de base fait bénéficier tous les équipements de transmission de son groupe des informations sur les motifs dont elle dispose. Ainsi, les motifs de non-émission des différents équipements d'émission peuvent être synchronisés ou identiques les uns aux autres, ce qui n'entache pas la mesure des émissions des autres équipements et donc minimise les biais de mesure sur les autres systèmes.

Préférentiellement, un seul découpage est réalisé pour un groupe, de sorte qu'aucun des équipements d'émission ne peut émettre pendant les segments de non-émission. Ce mode de réalisation est particulièrement avantageux dans un système de téléphonie mobile dans lequel chaque équipement est à la fois émetteur et récepteur. Dans un tel environnement, l'allocation du spectre est faite par la station relais ou station de base, qui transmet cette allocation aux équipements de son groupe en leur imposant un motif ou une combinaison de motifs de non-émission synchrone et commun à tous.

Dans les exemples décrits, les segments élémentaires de non-émission répartis sur les différents sous-ensembles de porteuses sont tous identiques en fréquence et en durée. En variante, ces segments ont des caractéristiques de fréquence et de durée variables mais conservent une surface identique afin de permettre une mesure similaire sur chaque sous-ensemble de porteuses.

Par ailleurs, les différentes unités formant le système peuvent être réparties différemment entre les équipements. En particulier, l'unité de mesure et l'unité d'allocation peuvent être dans des équipements distincts. De même, plusieurs unités de mesure peuvent être utilisées. Ainsi, dans un mode de réalisation, tous où certains des équipements du système comportent des unités de mesures qui sont mutualisées. En conséquence, ces équipements sont adaptés pour transmettre les mesures qu'ils effectuent à une unité d'allocation distante.

Enfin, les paramètres mesurés sur les signaux véhiculés dans le spectre de transmission pendant les segments de non-émission peuvent être tout type de paramètres appropriés tels que par exemple, un niveau de priorité d'affectation d'un sous-ensemble de porteuses déterminé, un niveau d'énergie sur une partie du spectre de transmission, des caractéristiques temporelles, des caractéristiques de codage, ou des caractéristiques d'émetteur et/ou de destinataire. Par exemple, les paramètres mesurés comprennent le code d'embrouillage du signal en CDMA, l'identité de la base en GSM, l'identité des pilotes en WRAN ou d'autres niveaux et caractéristiques physiques du signal.

En fonction des modes de réalisation, l'étape de non-émission comprend l'émission d'un symbole nul sur toutes les porteuses du segment élémentaire de non-émission correspondant ou encore comprend le rejet du signal radiofréquence sur toutes les porteuses du segment élémentaire de non-émission correspondant.

Il est à noter que les segments de non-émission peuvent être des segments au cours desquels aucun signal n'est émis ou encore des segments au cours desquels des signaux sont émis sous le niveau de masques radiofréquence. En conséquence ces signaux sont considérés comme non essentiels et ne sont pas analysés. De manière générale on considère que les segments de non-émission ne comportent pas de données. L'utilisation de masques radiofréquence est classique dans le domaine des télécommunications et est généralement mise en oeuvre par des analyseurs de spectre.

Par ailleurs, dans un mode de réalisation particulier, le signal émis comporte des informations de signalisation prévenant le récepteurs de l'espacement entre les segments de non-émission. Ces informations de signalisation représentent le décalage temporel et/ou fréquentiel entre les segments de non-émission. Ainsi, il est possible d'adapter et de faire évoluer les paramètres des segments de non-émission pendant une transmission.

## Revendications

1. Procédé de mesure de l'occupation d'au moins un spectre de transmission pour un système (2) de communications par signaux radiofréquences multiporteuses, le procédé comportant :
- une étape de découpage du spectre en sous-ensembles de porteuses (SSB) et de découpage en temps au sein des sous-ensembles (TE) pour former des segments temps/fréquence élémentaires ;
- une étape de non-émission de signal, par au moins un équipement d'émission (6) du système, pendant des segments élémentaires de non-émission décalés entre eux dans le temps et en fréquence, lesdits segments élémentaires de non-émission étant répartis dans le temps sur une période déterminée (TI) et en fréquence sur l'ensemble du spectre de transmission pour former un motif de non-émission; et
- une étape de mesure de paramètres choisis de signaux véhiculés dans le spectre de transmission pendant chacun de ces segments élémentaires de non-émission.

2. Procédé selon la revendication 1, **caractérisé en ce que** le système comprend une pluralité d'équipements d'émission (6) réalisant chacun une étape de découpage du spectre de transmission, une étape de non-émission pendant des segments élémentaires de non-émission et une étape de mesure de paramètres.

3. Procédé selon la revendication 1, **caractérisé en ce que** ledit système comprend une pluralité de groupes (4) d'équipements d'émission, les étapes de découpage, de non-émission et de mesure étant réalisées de manière coordonnée pour tout le groupe.

4. Procédé selon la revendication 1, **caractérisé en ce que** ledit système comprend une pluralité de groupes (4) d'équipements d'émission et **en ce que**, une seule étape de découpage est réalisée pour au moins un groupe (4₁), de sorte qu'aucun des équipements de ce groupe n'émet pendant les segments élémentaires de non-émission.

5. Procédé selon l'une quelconque des revendications 1 à 4, **caractérisé en ce que** des caractéristiques de fréquence (SSb) et/ou de durée (TE) des segments élémentaires sont déterminées en fonction de caractéristiques de l'environnement de fonctionnement.

6. Procédé selon l'une quelconque des revendications 1 à 5, **caractérisé en ce que** lesdits segments élémentaires de non-émission sont répartis pour former le motif de non-émission en fonction de caractéristiques de l'environnement de fonctionnement.

7. Procédé selon l'une quelconque des revendications 1 à 6, **caractérisé en ce que** l'étape de découpage ainsi que les étapes de non-émission et de mesure sont répétées plusieurs fois pour un même spectre de transmission, afin de former plusieurs motifs de non-émission (M1, M2, M3), l'étape de découpage comprenant la combinaison des différents motifs entre eux.

8. Procédé selon l'une quelconque des revendications 1 à 7, **caractérisé en ce qu'**au moins deux étapes de mesure sur des segments élémentaires de non-émission distincts sont réalisées simultanément.

9. Procédé selon la revendication 8, **caractérisé en ce que** lesdites étapes de non-émission et de mesure sur un segment élémentaire sont répétées sans allouer aucun segment de non-émission dans des segments réservés à des équipements particuliers.

10. Procédé d'allocation du spectre d'un signal multiporteuses d'un système (2) de communications, le procédé comportant la mesure de l'occupation du spectre selon le procédé de l'une quelconque des revendications 1 à 9 ainsi qu'une étape d'allocation du spectre entre des équipements d'émission du système en fonction desdites mesures.

11. Programme d'ordinateur pour un équipement d'un système (2) de communications par signaux radiofréquence multiporteuses, programme comprenant des instructions qui, lorsqu'elles sont exécutées sur un calculateur de cet équipement, commandent la mise en oeuvre du procédé selon au moins l'une quelconque des revendications 1 à 10.

12. Equipement (11) pour un système (2) de communications par signaux radiofréquence multiporteuses, l'équipement comportant des moyens (12) de découpage d'au moins un spectre de transmission en sous-ensembles de porteuses (SSB) et de découpage en temps (TE) au sein des sous-ensembles pour former des segments temps/fréquence élémentaires et des moyens (16) de non-émission de signal pendant des segments élémentaires de non-émission décalés entre eux dans le temps et en fréquence, lesdits segments élémentaires de non-émission étant répartis dans le temps sur une période déterminée (TI) et en fréquence sur l'ensemble du spectre de transmission pour former un motif de non-émission.

13. Equipement (11) pour un système (2) de communications par signaux radiofréquence multiporteuses, l'équipement comportant des moyens de réception d'un signal comportant des segments temps/fréquence élémentaires de non-émission pendant lesquels aucun signal n'est émis par au moins un équipement (6) du système, lesdits segments élémentaires de non-émission étant décalés entre eux dans le temps et en fréquence et étant répartis dans le temps sur une période déterminée (TI) et en fréquence sur l'ensemble du spectre de transmission pour former un motif de non-émission, et des moyens (14) de mesure de paramètres choisis de signaux véhiculés dans le spectre de transmission pendant chacun de ces segments élémentaires de non-émission.

## Patentansprüche

1. Verfahren zur Messung der Belegung wenigstens eines Übertragungsspektrums für ein System (2) zur Kommunikation durch Mehrträger-Funkfrequenzsignale, wobei das Verfahren umfasst:
- einen Schritt der Aufteilung des Spektrums in Untermengen von Trägern (SSB) und der Aufteilung in Zeitabschnitte innerhalb der Untermengen (TE), um elementare Zeit/Frequenz-Segmente zu bilden;
- einen Schritt des Nicht-Sendens eines Signals durch wenigstens eine Sendeeinrichtung (6) des Systems während elementarer Segmente des Nicht-Sendens, die zeitlich und in der Frequenz zueinander versetzt sind, wobei die elementaren Segmente des Nicht-Sendens zeitlich über einen bestimmten Zeitraum (TI) und in der Frequenz über das gesamte Übertragungsspektrum verteilt sind, um ein Nichtsende-Muster zu bilden; und
- einen Schritt der Messung ausgewählter Parameter von Signalen, die im Übertragungsspektrum transportiert werden, während jedes dieser elementaren Segmente des Nicht-Sendens.

2. Verfahren nach Anspruch 1, **dadurch gekennzeichnet, dass** das System mehrere Sendeeinrichtungen (6) umfasst, die jeweils einen Schritt der Aufteilung des Übertragungsspektrums, einen Schritt des Nicht-Sendens während elementarer Segmente des Nicht-Sendens und einen Schritt der Messung von Parametern ausführen.

3. Verfahren nach Anspruch 1, **dadurch gekennzeichnet, dass** das System mehrere Gruppen (4) von Sendeeinrichtungen umfasst, wobei die Schritte der Aufteilung, des Nicht-Sendens und der Messung auf koordinierte Weise für die gesamte Gruppe ausgeführt werden.

4. Verfahren nach Anspruch 1, **dadurch gekennzeichnet, dass** das System mehrere Gruppen (4) von Sendeeinrichtungen umfasst, und dadurch, dass ein einziger Schritt der Aufteilung für wenigstens eine Gruppe (4₁) ausgeführt wird, derart, dass keine der Einrichtungen dieser Gruppe während der elementaren Segmente des Nicht-Sendens sendet.

5. Verfahren nach einem der Ansprüche 1 bis 4, **dadurch gekennzeichnet, dass** charakteristische Merkmale der Frequenz (SSb) und/oder der Dauer (TE) der elementaren Segmente in Abhängigkeit von charakteristischen Merkmalen der Betriebsumgebung bestimmt werden.

6. Verfahren nach einem der Ansprüche 1 bis 5, **dadurch gekennzeichnet, dass** die elementaren Segmente des Nicht-Sendens so verteilt werden, dass sie das Nichtsende-Muster in Abhängigkeit von charakteristischen Merkmalen der Betriebsumgebung bilden.

7. Verfahren nach einem der Ansprüche 1 bis 6, **dadurch gekennzeichnet, dass** der Schritt der Aufteilung sowie die Schritte des Nicht-Sendens und der Messung für ein und dasselbe Übertragungsspektrum mehrere Male wiederholt werden, um mehrere Nichtsende-Muster (M1, M2, M3) zu bilden, wobei der Schritt der Aufteilung die Kombination der verschiedenen Muster miteinander umfasst.

8. Verfahren nach einem der Ansprüche 1 bis 7, **dadurch gekennzeichnet, dass** wenigstens zwei Schritte der Messung an verschiedenen elementaren Segmenten des Nicht-Sendens gleichzeitig ausgeführt werden.

9. Verfahren nach Anspruch 8, **dadurch gekennzeichnet, dass** die Schritte des Nicht-Sendens und der Messung an einem elementaren Segment wiederholt werden, ohne irgendein Segment des Nicht-Sendens in Segmenten, die für spezielle Einrichtungen reserviert sind, zuzuweisen.

10. Verfahren zur Zuweisung des Spektrums eines Mehrträgersignals eines Kommunikationssystems (2), wobei das Verfahren die Messung der Belegung des Spektrums gemäß dem Verfahren nach einem der Ansprüche 1 bis 9 sowie einen Schritt der Zuweisung des Spektrums zu Sendeeinrichtungen des Systems in Abhängigkeit von den Messungen umfasst.

11. Computerprogramm für eine Einrichtung eines Systems (2) zur Kommunikation durch Mehrträger-Funkfrequenzsignale, wobei das Programm Anweisungen umfasst, welche, wenn sie auf einem Rechner dieser Einrichtung ausgeführt werden, die Durchführung des Verfahrens nach wenigstens einem der Ansprüche 1 bis 10 steuern.

12. Einrichtung (11) für ein System (2) zur Kommunikation durch Mehrträger-Funkfrequenzsignale, wobei die Einrichtung aufweist: Mittel (12) zur Aufteilung wenigstens eines Übertragungsspektrums in Untermengen von Trägern (SSB) und zur Aufteilung in Zeitabschnitte (TE) innerhalb der Untermengen, um elementare Zeit/Frequenz-Segmente zu bilden, und Mittel (16) zum Nicht-Senden eines Signals während elementarer Segmente des Nicht-Sendens, die zeitlich und in der Frequenz zueinander versetzt sind, wobei die elementaren Segmente des Nicht-Sendens zeitlich über einen bestimmten Zeitraum (TI) und in der Frequenz über das gesamte Übertragungsspektrum verteilt sind, um ein Nichtsende-Muster zu bilden.

13. Einrichtung (11) für ein System (2) zur Kommunikation durch Mehrträger-Funkfrequenzsignale, wobei die Einrichtung aufweist: Mittel zum Empfang eines Signals, das elementare Zeit/Frequenz-Segmente des Nicht-Sendens aufweist, während welcher von wenigstens einer Einrichtung (6) des Systems kein Signal gesendet wird, wobei die elementaren Segmente des Nicht-Sendens zeitlich und in der Frequenz zueinander versetzt sind und zeitlich über einen bestimmten Zeitraum (TI) und in der Frequenz über das gesamte Übertragungsspektrum verteilt sind, um ein Nichtsende-Muster zu bilden, und Mittel (14) zur Messung ausgewählter Parameter von Signalen, die im Übertragungsspektrum transportiert werden, während jedes dieser elementaren Segmente des Nicht-Sendens.

## Claims

1. Method for measuring the occupancy of at least one transmission spectrum for a multicarrier radiofrequency signal communication system (2), the method comprising:
- a step of slicing the spectrum into subsets of carriers (SSB) and of time slicing within the subsets (TE) to form elementary time/frequency segments;
- a step of signal non-transmission, by at least one transmission equipment item (6) of the system, during elementary non-transmission segments mutually offset over time and in frequency, said elementary non-transmission segments being distributed in time over a determined period (Tl) and in frequency over the whole of the transmission spectrum to form a non-transmission pattern; and
- a step of measuring chosen parameters of signals conveyed in the transmission spectrum during each of these elementary non-transmission segments.

2. Method according to Claim 1, **characterized in that** the system comprises a plurality of transmission equipment items (6) each carrying out a step of slicing the transmission spectrum, a step of non-transmission during elementary non-transmission segments and a step of measuring parameters.

3. Method according to Claim 1, **characterized in that** said system comprises a plurality of groups (4) of transmission equipment items, the slicing, non-transmission and measurement steps being carried out in a coordinated manner for the whole group.

4. Method according to Claim 1, **characterized in that** said system comprises a plurality of groups (4) of transmission equipment items and **in that**, a single slicing step is carried out for at least one group (4₁), so that none of the equipment items of this group transmits during the elementary non-transmission segments.

5. Method according to any one of Claims 1 to 4, **characterized in that** characteristics of frequency (SSb) and/or of duration (TE) of the elementary segments are determined as a function of characteristics of the operating environment.

6. Method according to any one of Claims 1 to 5, **characterized in that** said elementary non-transmission segments are distributed so as to form the non-transmission pattern as a function of characteristics of the operating environment.

7. Method according to any one of Claims 1 to 6, **characterized in that** the slicing step as well as the non-transmission and measurement steps are repeated several times for one and the same transmission spectrum, so as to form several non-transmission patterns (M1, M2, M3), the slicing step comprising the inter-combining of the various patterns.

8. Method according to any one of Claims 1 to 7, **characterized in that** at least two steps of measurement on distinct elementary non-transmission segments are carried out simultaneously.

9. Method according to Claim 8, **characterized in that** said steps of non-transmission and measurement on an elementary segment are repeated without allocating any non-transmission segment in segments reserved for particular equipment items.

10. Method for allocating the spectrum of a multicarrier signal of a communication system (2), the method comprising the measurement of the occupancy of the spectrum according to the method of any one of Claims 1 to 9 as well as a step of allocating the spectrum between transmission equipment items of the system as a function of said measurements.

11. Computer program for an equipment item of a multicarrier radiofrequency signal communication system (2), the program comprising instructions which, when they are executed on a computer of this equipment item, control the implementation of the method according to at least any one of Claims 1 to 10.

12. Equipment item (11) for a multicarrier radiofrequency signal communication system (2), the equipment item comprising means (12) for slicing at least one transmission spectrum into subsets of carriers (SSB) and for time slicing (TE) within the subsets to form elementary time/frequency segments and means (16) for signal non-transmission during elementary non-transmission segments mutually offset over time and in frequency, said elementary non-transmission segments being distributed in time over a determined period (Tl) and in frequency over the whole of the transmission spectrum to form a non-transmission pattern.

13. Equipment item (11) for a multicarrier radiofrequency signal communication system (2), the equipment item comprising means for receiving a signal comprising elementary time/frequency non-transmission segments during which no signal is transmitted by at least one equipment item (6) of the system, said elementary non-transmission segments being mutually offset over time and in frequency and being distributed in time over a determined period (Tl) and in frequency over the whole of the transmission spectrum to form a non-transmission pattern, and means (14) for measuring chosen parameters of signals conveyed in the transmission spectrum during each of these elementary non-transmission segments.
